# EUROPEAN PATENT APPLICATION

(11) **EP 4 425 809 A2**
(43) Date of publication of application: **04.09.2024**
(21) Application number: 24154593.8
(22) Date of filing: 30.01.2024
(51) Int. Cl.: H04L 1/1829

(54) **LAYER INTERACTIONS FOR FLUSHED DATA IN HARQ BUFFER**

(30) Priority: 28.02.2023 FI 20235245
(71) Applicant: Nokia Technologies Oy, 02610 Espoo (FI)
(72) Inventor: TURTINEN, Samuli Heikki, Ii (FI); KOSKINEN, Jussi-Pekka, Oulu (FI)
(74) Representative: Nokia EPO representatives

(57) **Abstract**

Example embodiments of the present disclosure relate to an apparatus, a method, and a computer readable medium for layer interactions for flushed data in HARQ buffer. The apparatus receives from a network device an indication indicating that one or more RLC entities of the apparatus are not reset or reestablished. The apparatus indicates, from a MAC entity of the apparatus to an RLC entity of the one or more RLC entities of the apparatus, information related to RLC data. The information related to the RLC data is determined based on at least one MAC PDU associated with one or more HARQ buffers that are flushed or to be flushed. In this way, the data flushed from the HARQ buffers upon LTM can be immediately retransmitted by the RLC entity without waiting for RLC status report from the network, the interruption of data communication can be reduced, and LTM is optimized.

## Description

### FIELD

Example embodiments of the present disclosure generally relate to the field of communication, and in particular, to an apparatus, a method, and a computer readable medium for layer interactions for flushed data in a hybrid automatic repeat request (HARQ) buffer.

### BACKGROUND

When user equipment (UE) moves from the coverage area of one cell to another cell, at some point a serving cell change needs to be performed. Currently the serving cell change is triggered by Layer 3 (L3) measurements and is done by radio resource control (RRC) signalling triggered reconfiguration with synchronisation. All cases involve complete Layer 2 (L2) and Layer 1 (L1) resets, leading to longer latency, larger overhead and longer interruption time than beam switch mobility. The goal of L1/L2 mobility enhancements is to enable a serving cell change via L1/L2 signalling, in order to reduce the latency, overhead and interruption time. Solutions for L1/L2 triggered mobility need to be studied and enhanced.

### SUMMARY

In general, example embodiments of the present disclosure provide solutions with layer interactions for flushed data in a HARQ buffer, and for instance, for optimization of lower layer triggered mobility.

In a first aspect, there is provided an apparatus. The apparatus comprises at least one processor and at least one memory storing instructions that, when executed by the at least one processor, cause the apparatus at least to: receive, from a network device, an indication indicating that one or more radio link control, RLC, entities of the apparatus are not reset or reestablished; and indicate, from a medium access control, MAC, entity of the apparatus to an RLC entity of the one or more RLC entities of the apparatus, information related to RLC data, wherein the information related to the RLC data is determined based on at least one medium access control protocol data unit, MAC PDU, associated with one or more hybrid automatic repeat request, HARQ, buffers that are flushed or to be flushed.

In a second aspect, there is provided a method. The method comprises: receiving, at a terminal device and from a network device, an indication indicating that one or more radio link control, RLC, entities of the terminal device are not reset or reestablished; and indicate, by the terminal device and from a medium access control, MAC, entity of the terminal device to an RLC entity of the one or more RLC entities of the terminal device, information related to RLC data, wherein the information related to the RLC data is determined based on at least one medium access control protocol data unit, MAC PDU, associated with one or more hybrid automatic repeat request, HARQ, buffers that are flushed or to be flushed.

In a third aspect, there is provided an apparatus. The apparatus comprises: means for receiving, from a network device, an indication indicating that one or more radio link control, RLC, entities of the apparatus are not reset or reestablished; and means for indicating, from a medium access control, MAC, entity of the apparatus to an RLC entity of the one or more RLC entities of the apparatus, information related to RLC data, wherein the information related to the RLC data is determined based on at least one medium access control protocol data unit, MAC PDU, associated with one or more hybrid automatic repeat request, HARQ, buffers that are flushed or to be flushed.

In a fourth aspect, there is provided a non-transitory computer readable medium comprising program instructions. The program instructions, when executed by an apparatus, cause the apparatus to perform at least: receiving, from a network device, an indication indicating that one or more radio link control, RLC, entities of the apparatus are not reset or reestablished; and indicating, from a medium access control, MAC, entity of the apparatus to an RLC entity of the one or more RLC entities of the apparatus, information related to RLC data, wherein the information related to the RLC data is determined based on at least one medium access control protocol data unit, MAC PDU, associated with one or more hybrid automatic repeat request, HARQ, buffers that are flushed or to be flushed.

In a fifth aspect, there is provided a computer program comprising instructions, which, when executed by an apparatus, cause the apparatus at least to: receive, from a network device, an indication indicating that one or more radio link control, RLC, entities of the apparatus are not reset or reestablished; and indicate, from a medium access control, MAC, entity of the apparatus to an RLC entity of the one or more RLC entities of the apparatus, information related to RLC data, wherein the information related to the RLC data is determined based on at least one medium access control protocol data unit, MAC PDU, associated with one or more hybrid automatic repeat request, HARQ, buffers that are flushed or to be flushed.

In a sixth aspect, there is provided a terminal device. The terminal device comprises: receiving circuitry configured to receive, from a network device, an indication indicating that one or more radio link control, RLC, entities of the terminal device are not reset or reestablished; and indicating circuitry configured to indicate, from a medium access control, MAC, entity of the terminal device to an RLC entity of the one or more RLC entities of the terminal device, information related to RLC data, wherein the information related to the RLC data is determined based on at least one medium access control protocol data unit, MAC PDU, associated with one or more hybrid automatic repeat request, HARQ, buffers that are flushed or to be flushed.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, in which:
FIG. 1A illustrates an example of an application scenario in which some example embodiments of the present disclosure may be implemented;
FIG. 1B illustrates an example signalling procedure for L1/L2-triggered mobility (LTM) in accordance with some embodiments of the present disclosure;
FIG. 2 illustrates a flowchart of an example method implemented at an apparatus in accordance with some embodiments of the present disclosure;
FIG. 3 illustrates a simplified block diagram of a device that is suitable for implementing some example embodiments of the present disclosure; and
FIG. 4 illustrates a block diagram of an example of a computer readable medium in accordance with some example embodiments of the present disclosure.

Throughout the drawings, the same or similar reference numerals represent the same or similar elements.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "network", "communication network" or "data network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT), Wireless Fidelity (Wi-Fi) and so on. Furthermore, the communications between a terminal device and a network device/element in the communication network may be performed according to any suitable generation communication protocols, including, but not limited to, the fourth generation (4G), 4.5G, the future fifth generation (5G), IEEE 802.11 communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a WiFi device, a relay, a low power node such as a femto, a pico, and so forth, depending on the applied terminology and technology. In the following description, the terms "network device", "AP device", "AP" and "access point" may be used interchangeably.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), a station (STA) or station device, or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (for example, remote surgery), an industrial device and applications (for example, a robot and/or other wireless devices operating in an industrial and/or an automated processing chain contexts), a consumer electronics device, a device operating on commercial and/or industrial wireless networks, and the like. In the following description, the terms "station", "station device", "STA", "terminal device", "communication device", "terminal", "user equipment" and "UE" may be used interchangeably.

Release-18 work item on Further new radio (NR) mobility enhancements is ongoing in 3GPP, including:

| **Justification** | | | |
|---|---|---|---|
| When the UE moves from the coverage area of one cell to another cell, at some point a serving cell change needs to be performed. Currently serving cell change is triggered by L3 measurements and is done by RRC signalling triggered Reconfiguration with Synchronisation for change of PCell and PSCell, as well as release add for SCells when applicable. All cases involve complete L2 (and L1) resets, leading to longer latency, larger overhead and longer interruption time than beam switch mobility. The goal of L1/L2 mobility enhancements is to enable a serving cell change via L1/L2 signalling, in order to reduce the latency, overhead and interruption time. | | | |
| In Rel-17 Conditional PSCell change (CPC)/Conditional PSCell addition (CPA), a CPC/CPA-configured UE has to release the CPC/CPA configurations when completing random access towards the target PSCell. Hence the UE doesn't have a chance to perform subsequent CPC/CPA without prior CPC/CPA reconfiguration and re-initialization from the network. This will increase the delay for the cell change and increase the signaling overhead, especially in the case of frequent SCG changes when operating FR2. Therefore, MR-DC with selective activation of cell groups aims at enabling subsequent CPC/CPA after SCG change, without reconfiguration and re-initialization on the CPC/CPA preparation from the network. This results in a reduction of the signalling overhead and interrupting time for SCG change. | | | |
| Currently, CHO and MR-DC cannot be configured simultaneously. This limits the usefulness of these two features when MR-DC is configured. If it is not completed in Rel-17, Rel-18 should specify mechanisms for CHO and MR-DC to be configured simultaneously. However, this alone may not be sufficient to optimise MR-DC mobility, as the radio link quality of the conditionally-configured PSCell may not be good enough or may not be the best candidate PSCell when the UE accesses the target PCell, and this may impact the UE throughput. To mitigate this throughput impact, Rel-18 CHO+MRDC can consider CHO including target MCG and multiple candidate SCGs for CPC/CPA. | | | |

| **Objective** | | | |
|---|---|---|---|
| The detailed objective of this work item are: | | | |
| | 1. To specify mechanism and procedures of L1/L2 based inter-cell mobility for mobility latency reduction: | | |
| | | ∘ Configuration and maintenance for multiple candidate cells to allow fast application of configurations for candidate cells [RAN2, RAN3] | |
| | | ∘ Dynamic switch mechanism among candidate serving cells (including SpCell and SCell) for the potential applicable scenarios based on L1/L2 signalling [RAN2, RAN1] | |
| | | ∘ L1 enhancements for inter-cell beam management, including L1 measurement and reporting, and beam indication [RAN1, RAN2] | |
| | | | - *Note 1: Early RAN2 involvement is necessary, including the possibility of further clarifying the interaction between this bullet with the previous bullet* |
| | | ∘ Timing Advance management [RAN1, RAN2] | |
| | | ∘ CU-DU interface signaling to support L1/L2 mobility, if needed [RAN3] | |
| | | *Note 2: FR2 specific enhancements are not precluded, if any.* | |
| | | *Note 3: The procedure of L1*/*L2 based inter-cell mobility are applicable to the following scenarios:* | |
| | | | ▪ *Standalone, CA and NR-DC case with serving cell change within one CG* |
| | | | ▪ *Intra-DU case and intra-CU inter-DU case (applicable for Standalone and CA: no new RAN interfaces are expected)* |
| | | | ▪ *Both intra-frequency and inter-frequency* |
| | | | ▪ *Both FR1 and FR2* |
| | | | ▪ *Source and target cells may be synchronized or non-synchronized* |
| | 2. To specify mechanism and procedures of NR-DC with selective activation of the cell groups (at least for SCG) via L3 enhancements: | | |
| | | ∘ To allow subsequent cell group change after changing CG without reconfiguration and re-initiation of CPC/CPA [RAN2, RAN3, RAN4] | |
| | | *Note 4: A harmonized RRC modelling approach for objectives 1 and 2 could be considered to minimize the workload in RAN2.* | |
| | 3. To specify data forwarding optimizations for CHO including target MCG and target SCG in NR-DC [RAN3]. | | |
| | 4. To specify CHO including target MCG and candidate SCGs for CPC/CPA in NR-DC [RAN3, RAN2] | | |
| | | ∘ CHO including target MCG and target SCG is used as the baseline | |
| | 5. To specify RRM core requirements for the following, as necessary [RAN4]: | | |
| | | ∘ L1/L2-based inter-cell mobility | |
| | | ∘ Enhanced CHO configurations addressed by this WI | |
| | 6. To specify RF requirements to cover inter-frequency L1/L2-based mobility, as necessary [RAN 4]. | | |
| | 7. *To study the following, with completion targeted by RAN#98 meeting [RAN4]:* | | |
| | | ∘ The *impact of FR2 RRM mobility measurement acquisition and reporting on FR2 SCell*/*SCG setup*/*resume delay for a UE connecting from idle*/*inactive mode.* | |
| | | ∘ *The level of feasible improvement in FR2 SCell*/*SCG setup delay from defining new UE measurement procedures and RRM core requirements, and whether additional information from the network would help the UE to perform those measurements effectively. The following sequence of events should be assumed.* | |
| | | | ▪ *The UE initiates and performs improved measurements when it requests RRC connection setup*/*resume.* |
| | | | ▪ *After acquiring those improved measurements, the UE subsequently reports those measurements to the network to support SCell*/*SCG setup.* |

gNB can be divided into two physical entities named CU (Centralized Unit) and DU (Distributed Unit). CU provides support for the higher layers of the protocol stack such as SDAP, PDCP and RRC while DU provides support for the lower layers of the protocol stack such as RLC, MAC and Physical layer.

In case of intra-DU L1/L2 triggered mobility (LTM), both the source and target cells are served by the same DU controlling PHY, MAC and RLC layers/entities. Depending on the network implementation, it might be possible to retain the soft/HARQ buffers at the UE side after the cell switch to be able to continue with the re-transmissions at both MAC and RLC layers in the target cell. Hence, the UE could be scheduled with HARQ re-transmissions in the target cell and already received RLC SDU segments would not need to be retransmitted.

However, retaining the soft buffers come with complexity at both UE and network side while the achievable gains are questionable: network has the possibility to transmit even the exact same TB as new transmission in the target cell and only the possible soft combining gain at the UE side is lost. On the other hand, maintaining the UL HARQ buffers could come with slight more benefit since re-transmission of the data in the UL HARQ buffers could begin in the target cell without the need for the network to first trigger RLC re-transmissions explicitly by an RLC STATUS REPORT. And since the NDIs are always set to 0 for all UL HARQ processes, network has the possibility to flush the buffer by scheduling new transmission grant in UL in the target cell. In any case, the gains are rather negligible and the possibility to maintain HARQ buffers also depends on the possibility to have a valid timing alignment (TA) to the target cell already at the point upon HO.

Observation 1: Retaining the HARQ and soft buffers comes with complexity at both UE and network side while the achievable gains are questionable.

Proposal 1: HARQ and soft buffers are not retained for partial MAC reset, i.e., HARQ and soft buffers are flushed. In LTM, the cell change is decided based on L1 beam measurements which can fluctuate much more than L3 cell quality measurements. Accordingly, flush of RLC buffers would occur more often in LTM than in L3 mobility due to the increase in the number of handovers and ping-pongs. Thus, avoiding the need to retransmit already received RLC segments after the cell switch could be critical for LTM and can help to reduce the latency in delivering the pending packets.

Observation 3: Resuming the re-transmissions at RLC layer after cell switch is more critical for LTM than L3 mobility due to higher rate of handovers and ping-pongs.

When the UE flushes the UL HARQ buffers while not re-establishing RLC entities in LTM (e.g., based on NW explicitly indicating RLC re-establishment/reset is not performed), the data multiplexed in the MAC PDU(s) of the UL HARQ buffers are lost. NW may send RLC STATUS REPORT to the UE based on the LTM decision whilst the RLC STATUS REPORT can (n)acknowledge RLC PDUs (segments) only up to the point of ACK_SN which may not account the PDUs that were multiplexed in MAC PDU(s) at the UE. Hence, longer interruption is expected in data communication given there may be a need for multiple RLC STATUS REPORTS by the network before the UE retransmits the data.

According to embodiments of the present disclosure, there is providing a solution for optimizing lower layer trigger handover. The UE may receive from gNB receive an indication indicating that one or more RLC entities of the UE are not reset or reestablished. For example, in case that both the source cell and target cell are served by the same DU, the gNB may transmit the indication to the UE. The MAC entity of the UE may indicates to an RLC entity of the UE information related to RLC data in the MAC PDU(s) associated with the HARQ butters that has been flushed or to be flushed. In this way, the data flushed from the HARQ buffers upon LTM can be immediately retransmitted by the RLC entity(ies) of the UE without waiting for RLC status report from the network, and the interruption of data communication can be reduced and LTM is made more optimal

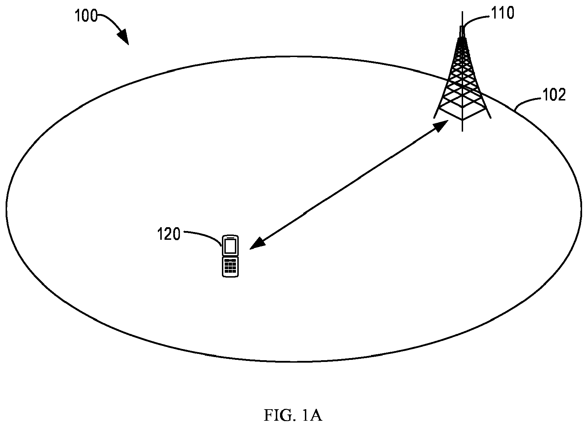

For illustrative purposes, principle and example embodiments of the present disclosure will be described below with reference to Fig. 1A to Fig. 4. However, it is to be noted that these embodiments are given to enable the skilled in the art to understand inventive concepts of the present disclosure and implement the solution as proposed herein, and not intended to limit scope of the present application in any way.

FIG. 1A illustrates an example of an application scenario 100 in which some example embodiments of the present disclosure may be implemented. The application scenario 100, which is a part of a communication network, includes terminal devices and network devices.

In the descriptions of the example embodiments of the present disclosure, the network environment 100 may also be referred to as a communication system 100 (for example, a portion of a communication network). For illustrative purposes only, various aspects of example embodiments will be described in the context of one or more terminal devices and network devices that communicate with one another. It should be appreciated, however, that the description herein may be applicable to other types of apparatus or other similar apparatuses that are referenced using other terminology.

The network device 110 can provide services to the terminal device 120, and the network device 110 and the terminal device 120 may communicate data and control information with each other. In some embodiments, the network device 110 and the terminal device 120 may communicate with direct links/channels.

In the communication system 100, a link from the network device 110 to the terminal device 120 is referred to as a downlink (DL), while a link from the terminal device 120 to the network device 110 is referred to as an uplink (UL). In downlink, the network device 110 is a transmitting (TX) device (or a transmitter) and the terminal device 120 is a receiving (RX) device (or a receiver). In uplink, the terminal device 120 is a transmitting (TX) device (or a transmitter) and the network device 110 is a RX device (or a receiver). It is to be understood that the network device 110 may provide one or more serving cells. As illustrated in Fig. 1A, the network device 110 provides one serving cell 102, and the terminal device 120 camps on the serving cell 102. In some embodiments, the network device 110 can provide multiple serving cells and the terminal device 120 may switch from a source cell to a target cell between the serving cells during its mobility. It is to be understood that the number of serving cell(s) shown in Fig. 1A is for illustrative purposes without suggesting any limitation.

Communications in the network environment 100 may be implemented according to any proper communication protocol(s), comprising, but not limited to, cellular communication protocols of the fourth generation (4G) and the fifth generation (5G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

It is to be understood that the number of devices and their connection relationships and types shown in Fig. 1A are for illustrative purposes without suggesting any limitation. The communication system 100 may comprise any suitable number of devices adapted for implementing embodiments of the present disclosure.

As illustrated in Fig. 1A, the communication network 100 may include a network device 110 (which may also be referred to as a gNB or BS). The communication network 100 may further include a terminal device 120 (which may also be referred to as user equipment 120 or UE 120. Although only one network device 110 and one terminal devices 120 are shown in FIG. 1A, the numbers of the network device and the terminal device are not limited. In other words, there may be one or more network devices 110 and one or more terminal devices 120 in the network

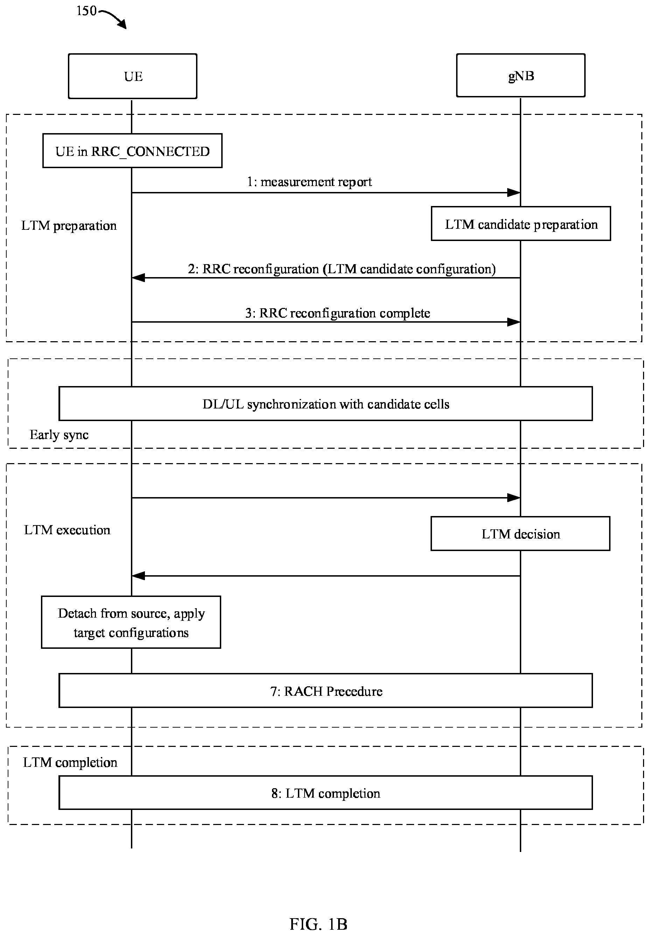

FIG. 1B illustrates an example signalling procedure 150 for L1/L2-triggered mobility in accordance with some embodiments of the present disclosure. Subsequent LTM is done by repeating the early synchronization, LTM execution, and LTM completion steps without releasing other candidates after each LTM completion.

The procedure for LTM is as follows.
- At step 1, the UE sends a MeasurementReport message to the gNB. The gNB decides to use LTM and initiates LTM candidate preparation.
- At step 2, the gNB transmits an RRCReconfiguration message to the UE including the configuration of one or multiple LTM candidate target cells.
- At step 3, the UE stores the configuration of LTM candidate target cell(s) and transmits an RRCReconfigurationComplete message to the gNB.
- At step 4, the UE may perform DL synchronization and time alignment (TA) acquisition with candidate target cell(s) before receiving the LTM cell switch command. The DL synchronization for candidate cell(s) before cell switch command may be supported, at least based on SSB. The TA acquisition of candidate cell(s) before LTM cell switch command may supported, at least based on PDCCH ordered RACH, where the PDCCH order is only triggered by source cell.
- At step 5, the UE performs L1 measurements on the configured LTM candidate target cell(s), and transmits lower-layer measurement reports to the gNB. The lower-layer measurement reports may be carried on L1 or MAC.
- At step 6, the gNB decides to execute LTM cell switch to a target cell, and transmits a MAC CE triggering LTM cell switch by including the candidate configuration index of the target cell. The UE switches to the configuration of the LTM candidate target cell.
- At step 7, the UE performs random access channel (RACH) procedure towards the target cell, if TA is not available.
- At step 8, the UE indicates successful completion of the LTM cell switch towards target cell. An uplink signal or message after the UE has switched to the target cell may be used to indicate successful completion of the LTM cell switch.

Upon LTM procedure initiation, in case a NW indicates that one or more of the RLC entities of the UE are not reset/reestablished, the MAC entity of the UE indicates to the one or more RLC entities the information of RLC data in the MAC PDU(s) associated with the flushed HARQ buffers. The information of the RLC data may be RLC-entity -specific.

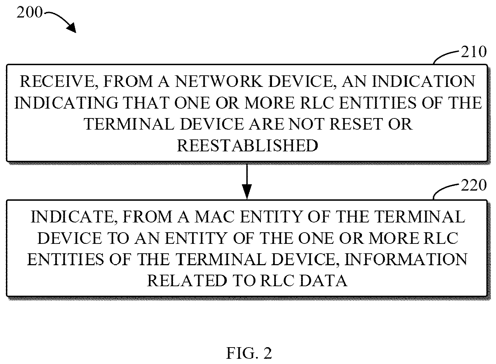

FIG. 2 illustrates a flowchart of an example method 200 implemented at an apparatus (for example, the terminal device 120) in accordance with some embodiments of the present disclosure. For ease of understanding, the method 200 will be described from the perspective of the terminal device 120 with reference to FIG. 1A. However, it is understood that the example method 200 can generally be performed by an apparatus which can communicate with a network device.

At block 210, the terminal device 120 receives, from a network device 110, an indication indicating that one or more RLC entities of the apparatus are not reset or reestablished. In some embodiments, the indication may be comprised in a cell switch command, for example, a MAC CE. In some alternative embodiments, the indication may be comprised in a configuration related to a target cell, for example, in a radio resource control (RRC) configuration.

At block 220, the terminal device 120 indicates, from a MAC entity of the terminal device to an RLC entity of the one or more RLC entities of the terminal device, information related to RLC data. The information related to the RLC data may be determined based on at least on MAC PDU, associated with one or more HARQ buffers that are flushed or to be flushed. The RLC PDU(s) may be multiplexed into the MAC PDU(s) by the MAC entity and one MAC PDU may comprise one or more RLC PDUs from one or more RLC entities. The MAC entity may determine the information related to the RLC data based on the MAC PDU(s) associated with the HARQ buffers.In some embodiments, the MAC entity may provide the exact RLC PDU(s) as received from the RLC entity back to the RLC entity. In this way, MAC does not need to interpret the details of an RLC PDU. Accordingly, the information related to the RLC data may comprise one or more RLC PDUs received from the one or more RLC entities respectively.

In some embodiments, the MAC entity may, alternatively or additionally, provide the RLC PDU header(s) of RLC PDU(s) as received from the RLC entity back to the RLC entity. Accordingly, the information related to the RLC data may comprise one or more RLC PDU headers of RLC PDU(s) as received from the one or more RLC entities respectively.

Additionally or alternatively, the information related to the RLC data may comprise information about the RLC data of a HARQ process the RLC entity provided when the MAC layer entity previously requested the RLC entity to provide data for the HARQ process.

In some embodiments, the RLC entity may consider the radio link control service data unit (RLC SDU(s)) or RLC SDU segment(s) associated with the RLC data for re-transmission based on the information indicated from the MAC entity. The terminal device 120 may transmit or retransmit, based at least on the information related to the RLC data, one or more units, RLC SDU(s), or RLC SDU segments associated with the RLC data. This may ensure these RLC SDU(s)/segment(s) are prioritized to be transmitted in the Tx RLC entity. For example, during or after LTM, the RLC entity may submits the the RLC SDU or RLC SDU segments related to the flushed RLC data to the MAC entity which then transmit the RLC SDU or RLC SDU segments for the target cell.

In some embodiments, the terminal device 120 may skip, based on the information related to RLC data and at the RLC entity of the one or more RLC entities, incrementing a retransmission counter associated with one or more RLC SDU associated with the RLC data. For example, the RLC entity does not increment the RETX_COUNT associated with the RLC SDU in this case.

In some embodiments, along with the indication about the RLC data to the one or more RLC entities, the MAC entity may indicate to the RLC entity if the RLC data was transmitted by the MAC entity before the flush/LTM command/the indication. For this case, the terminal device 120 may indicate from the MAC entity to the RLC entity information related to whether the RLC data was transmitted or not by the MAC entity before flushing at least one of the one or more HARQ buffers, or before receiving a cell switch command from the network device 120, or before receiving the indication from the network device 120. In some embodiments, the indication related to whether the RLC data has been transmitted may also be RLC entity specific.

By means of this information, the RLC entity may consider or determine the RLC SDU(s) that has not been submitted to lower layers, e.g. the MAC entity. In some embodiments, the RLC entity may determine an RLC SDU has not been submitted to the MAC entity or transmitted if no byte of the RLC SDU was transmitted based at least on the the information related to whether the RLC data was transmitted or not. For example, only if neither the RLC SDU nor any part (a segment) thereof has been submitted to the lower layers, the RLC entity consider the RLC SDU has not been submitted to lower layers or transmitted.

The RLC entity may discard RLC SDU based on the following TS 38.322:

| |
|---|
| 5.4 SDU discard procedures |
| When indicated from upper layer (i.e. PDCP) to discard a particular RLC SDU, the transmitting side of an AM RLC entity or the transmitting UM RLC entity shall discard the indicated RLC SDU, **if neither the RLC SDU nor a segment thereof has been submitted to the lower layers.** The transmitting side of an AM RLC entity shall not introduce an RLC SN gap when discarding an RLC SDU. |

In one example, the RLC entity may discard discard the RLC SDU when upper layers indicate to discard the particular RLC SDU and the MAC entity indicates the RLC SDU was not transmitted by the MAC entity before the flush/LTM command/the indication. In an event that an upper layer (e.g. PDCP layer) of the terminal device 120 indicates the RLC entity to discard a RLC SDU, the RLC entity may determine that the RLC SDU has not been transmitted based at least on the information related to whether the RLC data was transmitted or not. Based on determining that the RLC SDU has not been transmitted, the RLC entity may discard the RLC SDU.

The RLC entity may poll based on the following TS 38.322:

| | | |
|---|---|---|
| 5.3.3 Polling | | |
| 5.3.3.1 General | | |
| An AM RLC entity can poll its peer AM RLC entity in order to trigger STATUS reporting at the peer AM RLC entity. | | |
| 5.3.3.2 Transmission of a AMD PDU | | |
| Upon notification of a transmission opportunity by lower layer, for each AMD PDU submitted for transmission such that the AMD PDU contains either a not previously transmitted RLC SDU or an RLC SDU segment containing not previously transmitted byte segment, the transmitting side of an AM RLC entity shall: | | |
| | - increment PDU_WITHOUT_POLL by one; | |
| | - increment BYTE_WITHOUT_POLL by every new byte of Data field element that it maps to the Data field of the AMD PDU; | |
| | - if PDU_WITHOUT_POLL >= pollPDU; or | |
| | - if BYTE_WITHOUT_POLL >= pollByte: | |
| | | - include a poll in the AMD PDU as described below. |
| Upon notification of a transmission opportunity by lower layer, for each AMD PDU submitted for transmission, the transmitting side of an AM RLC entity shall: | | |
| | - if both the transmission buffer and the retransmission buffer becomes empty (excluding transmitted RLC SDUs or RLC SDU segments awaiting acknowledgements) after the transmission of the AMD PDU; or | |
| | - if no new RLC SDU can be transmitted after the transmission of the AMD PDU (e.g. due to window stalling); | |
| | | - include a poll in the AMD PDU as described below. |
| | NOTE: Empty RLC buffer (excluding transmitted RLC SDUs or RLC SDU segments awaiting acknowledgements) should not lead to unnecessary polling when data awaits in the upper layer. Details are left up to UE implementation. | |
| To include a poll in an AMD PDU, the transmitting side of an AM RLC entity shall: | | |
| | - set the P field of the AMD PDU to "1"; | |
| | - set PDU_WITHOUT_POLL to 0; | |
| | - set BYTE_WITHOUT_POLL to 0. | |
| Upon submission of an AMD PDU including a poll to lower layer, the transmitting side of an AM RLC entity shall: | | |
| | - set POLL_SN to the highest SN of the AMD PDU among the AMD PDUs submitted to lower layer; | |
| | - if *t-PollRetransmit* is not running: | |
| | | - start *t-PollRetransmit.* |
| | - else: | |
| | | - restart *t-PollRetransmit.* |

If any of the RLC PDU(s) of the RLC data indicated by the MAC entity includes a poll (i.e. poll bit P set to '1'), the RLC entity may include a poll in an AMD PDU to be transmitted. This may be only possible for an RLC acknowledged mode (AM) entity(ies). In some embodiments, based at least on the information related to the RLC data, the RLC entity of the terminal device 120 may determine that a poll is comprised in at least one of one or more RLC PDU of the RLC data. Based on the determining, the RLC entity may further include a poll in an RLC PDU to be transmitted.

In some embodiments, the MAC entity may provide the information related to the RLC data to both RLC acknowledged mode (AM) and RLC unacknowledged mode (UM) entities. In some embodiments, the MAC entity may only provide the information related to the RLC data to the RLC AM entity(ies).

In view of the above, it can be seen that, by use of layer interaction between the MAC entity and RLC entity, the terminal device can immediately retransmit data flushed by the MAC entity from the HARQ buffers upon L1/L2-triggered mobility (LTM) without waiting for RLC status report from the network. It also avoids the need to retransmit already received RLC SDU or RLC SDU segments, and thus reduces the latency in delivering the pending packet during handover.

In some embodiments, an apparatus capable of perform the method 200 may comprise at least one processor and at least one memory storing instructions. The instructions when executed by the at least one processor may cause the apparatus at least to: receive, from a network device, an indication indicating that one or more radio link control (RLC) entities of the apparatus are not reset or reestablished; and indicate, from a medium access control (MAC) entity of the apparatus to an RLC entity of the one or more RLC entities of the apparatus, information related to RLC data, wherein the information related to the RLC data is determined based on at least one medium access control protocol data unit (MAC PDU) associated with one or more hybrid automatic repeat request (HARQ) buffers that are flushed or to be flushed.

In some example embodiments, the information related to the RLC data may comprise one or more of: one or more RLC PDUs received from the RLC entity; one or more RLC PDU headers of RLC PDUs received from the RLC entity; or information about the RLC data of a HARQ process the RLC entity provided when the MAC layer entity previously requested the RLC entity to provide data for the HARQ process.

In some example embodiments, the apparatus may further be caused to transmit or retransmit, based at least on the information related to the RLC data, one or more radio link control service data units (RLC SDUs), or RLC SDU segments associated with the RLC data.

In some example embodiments, the apparatus may further be caused to determine, based on at least on the information related to the RLC data, whether to retransmit one or more RLC SDUs or RLC SDU segments associated with the RLC data.

In some example embodiments, the apparatus may further be caused to skip, based at least on the information related to RLC data and at the RLC entity, incrementing a retransmission counter associated with one or more RLC SDU associated with the RLC data.

In some example embodiments, the apparatus may further be caused to indicate, from the MAC entity to the RLC entity, information related to whether the RLC data was transmitted or not by the MAC entity before at least one of: flushing at least one of the one or more HARQ buffers, receiving a cell switch command from the network device, or receiving the indication from the network device.

In some example embodiments, the apparatus may further be caused to: in an event that an upper layer of the apparatus indicates the RLC entity of the one or more RLC entities to discard an RLC SDU, determine the RLC SDU has not been transmitted based at least on the information related to whether the RLC data was transmitted or not; and based on the determining, discard the RLC SDU.

In some example embodiments, wherein the RLC entity may determine that an RLC SDU has not been transmitted only if none of parts of the RLC SDU was transmitted, based at least on the information related to whether the RLC data was transmitted or not.

In some example embodiments, the apparatus may further be caused to: determine, based at least on the information related to the RLC data and at the RLC entity, that a poll is comprised in at least one of one or more RLC PDUs of the RLC data; and based on the determining and at the RLC entity, include a poll in an RLC PDU to be transmitted.

In some example embodiments, the RLC entity may comprise at least one of an RLC acknowledged mode (AM) entity or an RLC unacknowledged mode (UM) entity.

In some example embodiments, an apparatus capable of performing the method 200 may comprise means for performing the respective steps of the method 200. The means may be implemented in any suitable form. For example, the means may be implemented in a circuitry or software module.

In some example embodiments, the apparatus comprises means for receiving, from a network device, an indication indicating that one or more radio link control (RLC) entities of the apparatus are not reset or reestablished. The apparatus may further comprise means for indicating, from a medium access control (MAC) entity of the apparatus to an RLC entity of the one or more RLC entities of the apparatus, information related to RLC data. The information related to the RLC data may be determined based on at least one medium access control protocol data unit (MAC PDU) associated with one or more hybrid automatic repeat request (HARQ) buffers that are flushed or to be flushed.

In some example embodiments, the information related to the RLC data may comprise one or more of: one or more RLC PDUs received from the one or more RLC entities; one or more RLC PDU headers of RLC PDUs received from the RLC entity; or information about the RLC data of a HARQ process the RLC entity provided when the MAC layer entity previously requested the RLC entity to provide data for the HARQ process.

In some example embodiments, the apparatus may further comprise means for transmitting or retransmitting, based at least on the information related to the RLC data, one or more radio link control service data unit, RLC SDU, or RLC SDU segments associated with the RLC data.

In some embodiments, the apparatus may further comprise means for determining, based on at least on the information related to the RLC data, whether to retransmit one or more RLC SDUs or RLC SDU segments associated with the RLC data.

In some example embodiments, the apparatus may further comprise means for skipping, based at least on the information related to RLC data and at the RLC entity, incrementing a retransmission counter associated with one or more RLC SDU associated with the RLC data.

In some example embodiments, the apparatus may further comprise means for indicating, from the MAC entity to the RLC entity, information related to whether the RLC data was transmitted or not by the MAC entity before at least one of: flushing at least one of the one or more HARQ buffers, receiving a cell switch command from the network device, or receiving the indication from the network device.

In some example embodiments, the apparatus may further comprise means for, in an event that an upper layer of the apparatus indicates the RLC entity to discard an RLC SDU, determining the RLC SDU has not been transmitted based at least on the information related to whether the RLC data was transmitted or not. The apparatus may further comprise means for discarding the RLC SDU based on determining.

In some example embodiments, the RLC entity may determine that an RLC SDU has not been transmitted only if none of parts of the RLC SDU was transmitted, based at least on the information related to whether the RLC data was transmitted or not.

In some example embodiments, the apparatus may further comprise means for determining, based at least on the information related to the RLC data and at the RLC entity, that a poll is comprised in at least one of one or more RLC PDU of the RLC data; and means for including, based on the determining and at the RLC entity, a poll in an RLC PDU to be transmitted.

In some example embodiments, the RLC entity may comprise at least one of an RLC acknowledged mode (AM) entity or an RLC unacknowledged mode (UM) entity.

In some embodiments, the apparatus further comprises means for performing other steps in some embodiments of the method 200. In some embodiments, the means comprises at least one processor and at least one memory including computer program code, the at least one memory and computer program code configured to, with the at least one processor, cause the performance of the apparatus.

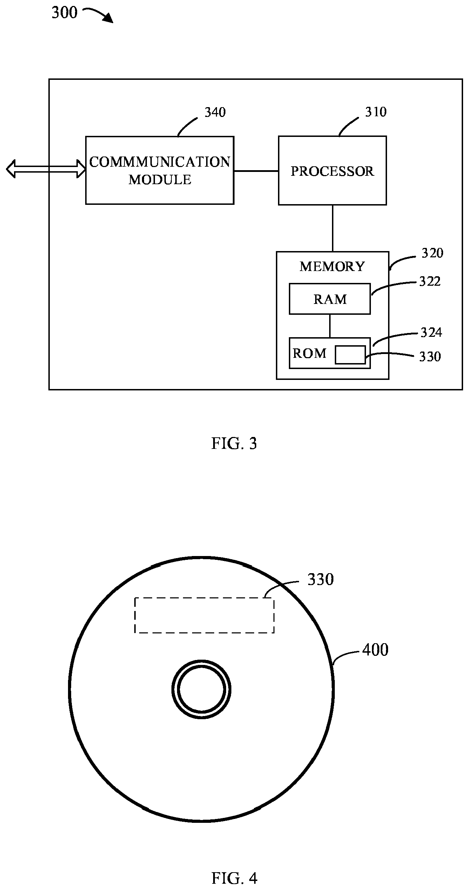

FIG. 3 illustrates a simplified block diagram of a device 300 that is suitable for implementing some example embodiments of the present disclosure. The device 300 may be provided to implement a communication device or a network element, for example, the network device 110 and the terminal device 120 as shown in FIG. 1A. As shown, the device 300 includes one or more processors 310, one or more memories 320 coupled to the processor 310, and one or more communication modules 340 coupled to the processor 310.

The communication module 340 is for bidirectional communications. The communication module 340 has at least one antenna to facilitate communication. The communication interface may represent any interface that is necessary for communication with other network elements.

The processor 310 may be of any type suitable to the local technical network and may include one or more of the following: general purpose computers, special purpose computers, microprocessors, digital signal processors (DSPs) and processors based on multicore processor architecture, as non-limiting examples. The device 300 may have multiple processors, such as an application specific integrated circuit chip that is slaved in time to a clock which synchronizes the main processor.

The memory 320 may include one or more non-volatile memories and one or more volatile memories. Examples of the non-volatile memories include, but are not limited to, a Read Only Memory (ROM) 324, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 322 and other volatile memories that will not last in the power-down duration.

A computer program 330 includes computer executable instructions that are executed by the associated processor 310. The program 330 may be stored in the ROM 324. The processor 310 may perform any suitable actions and processing by loading the program 330 into the RAM 322.

The embodiments of the present disclosure may be implemented by means of the program 330 so that the device 300 may perform any process of the disclosure as discussed with reference to FIGS. 1A, 1B and 2. The embodiments of the present disclosure may also be implemented by hardware or by a combination of software and hardware.

In some example embodiments, the program 330 may be tangibly contained in a computer readable medium which may be included in the device 300 (such as in the memory 320) or other storage devices that are accessible by the device 300. The device 300 may load the program 330 from the computer readable medium to the RAM 322 for execution. The computer readable medium may include any types of tangible non-volatile storage, such as ROM, EPROM, a flash memory, a hard disk, CD, DVD, and the like.

FIG. 4 illustrates a block diagram of an example of a computer readable medium 400 in accordance with some example embodiments of the present disclosure. The computer readable medium 400 has the program 330 stored thereon. It is noted that although the computer readable medium 400 is depicted in form of CD or DVD in FIG. 4, the computer readable medium 400 may be in any other form suitable for carry or hold the program 330.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out any one of the method 200 as described above with reference to FIG. 2. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. An apparatus comprising:
means for receiving (210), from a network device, an indication indicating that one or more radio link control, RLC, entities of the apparatus are not reset or reestablished; and
means for indicating (220), from a medium access control, MAC, entity of the apparatus to an RLC entity of the one or more RLC entities of the apparatus, information related to RLC data, wherein the information related to the RLC data is determined based on at least one MAC protocol data unit, PDU, associated with one or more hybrid automatic repeat request, HARQ, buffers that are flushed or to be flushed.

2. The apparatus of claim 1, wherein the information related to the RLC data comprises one or more of:
one or more RLC PDUs received from the RLC entity;
one or more RLC PDU headers of RLC PDUs received from the RLC entity; or
information about the RLC data of a HARQ process the RLC entity provided when the MAC layer entity previously requested the RLC entity to provide data for the HARQ process.

3. The apparatus of claim 1 or 2, wherein the apparatus further comprises :
means for transmitting or retransmitting, based at least on the information related to the RLC data, one or more RLC service data units, SDUs, or RLC SDU segments associated with the RLC data.

4. The apparatus of claim 1 or 2, wherein the apparatus further comprises:
means for determining, based on at least on the information related to the RLC data, whether to retransmit one or more RLC SDUs or RLC SDU segments associated with the RLC data.

5. The apparatus of any of claims 1 to 4, wherein the apparatus further comprises:
means for skipping, based at least on the information related to RLC data and at the RLC entity, incrementing a retransmission counter associated with one or more RLC SDU associated with the RLC data.

6. The apparatus of any of claims 1 to 5, wherein the apparatus further comprises:
means for indicating, from the MAC entity to the RLC entity, information related to whether the RLC data was transmitted or not by the MAC entity before at least one of:
means for flushing at least one of the one or more HARQ buffers,
means for receiving a cell switch command from the network device, or
means for receiving the indication from the network device.

7. The apparatus of claim 6, wherein the apparatus further comprises:
in an event that an upper layer of the apparatus indicates the RLC entity to discard an RLC SDU,
means for determining that the RLC SDU has not been transmitted based at least on the information related to whether the RLC data was transmitted or not; and
means for discarding, based on the determining, the RLC SDU.

8. The apparatus of claim 6, wherein the RLC entity determines that an RLC SDU has not been transmitted only if none of parts of the RLC SDU was transmitted, based at least on the information related to whether the RLC data was transmitted or not.

9. The apparatus of any of claims 1 to 8, wherein the apparatus further comprises:
means for determining, based at least on the information related to the RLC data and at the RLC entity, that a poll is comprised in at least one of one or more RLC PDUs of the RLC data; and
means for including, based on the determining and at the RLC entity, a poll in an RLC PDU to be transmitted.

10. The apparatus of any of claims 1 to 9, wherein the RLC entity comprises at least one of an RLC acknowledged mode, AM, entity or an RLC unacknowledged mode, UM, entity.

11. A method comprising, by a terminal device:
receiving (210), from a network device, an indication indicating that one or more radio link control, RLC, entities of the terminal device are not reset or reestablished; and
indicating (220), from a medium access control, MAC, entity of the terminal device to an RLC entity of the one or more RLC entities of the terminal device, information related to RLC data,
wherein the information related to the RLC data is determined based on at least one MAC protocol data unit, PDU, associated with one or more hybrid automatic repeat request, HARQ, buffers that are flushed or to be flushed.

12. The method of claim 11, wherein the information related to the RLC data comprises one or more of:
one or more RLC PDUs received from the RLC entity;
one or more RLC PDU headers of RLC PDUs received from the RLC entity; or
information about the RLC data of a HARQ process the RLC entity provided when the MAC layer entity previously requested the RLC entity to provide data for the HARQ process.

13. The method of claim 11 or 12, further comprising, by the terminal device:
indicating, from the MAC entity to the RLC entity, information related to whether the RLC data was transmitted or not by the MAC entity before at least one of:
flushing at least one of the one or more HARQ buffers,
receiving a cell switch command from the network device, or
receiving the indication from the network device.

14. The method of any of claims 1 1 to 13, further comprising, by the terminal device:
determining, based at least on the information related to the RLC data and at the RLC entity, that a poll is comprised in at least one of one or more RLC PDUs of the RLC data; and
including, based on the determining and at the RLC entity, a poll in an RLC PDU to be transmitted.

15. A computer program that, when executed by an apparatus, causes the apparatus to perform at least:
receiving (210), from a network device, an indication indicating that one or more radio link control, RLC, entities of the apparatus are not reset or reestablished; and
indicating (220), from a medium access control, MAC, entity of the apparatus to an RLC entity of the one or more RLC entities of the apparatus, information related to RLC data,
wherein the information related to the RLC data is determined based on at least one MAC protocol data unit, PDU, associated with one or more hybrid automatic repeat request, HARQ, buffers that are flushed or to be flushed.
